# EUROPÄISCHE PATENTSCHRIFT

(11) **EP 2 529 189 B1**
(45) Veröffentlichungstag und Bekanntmachung des Hinweises auf die Patenterteilung: **26.04.2017**
(21) Anmeldenummer: 11708780.9
(22) Anmeldetag: 08.03.2011
(51) Int. Cl.: G01D 9/00, G07C 5/00, H04Q 9/00

(54) **SYSTEM UND VERFAHREN ZUM BEREITSTELLEN VON SENSORDATEN**
SYSTEM AND METHOD FOR PROVIDING SENSOR DATA
SYSTÈME ET PROCÉDÉ DE FOURNITURE DE DONNÉES DE CAPTEUR

(30) Priorität: 22.04.2010 DE 102010017938
(43) Veröffentlichungstag der Anmeldung: 05.12.2012
(73) Patentinhaber: Siemens Aktiengesellschaft, 80333 München (DE)
(72) Erfinder: FRIES, Steffen, 85598 Baldham (DE); NIEDERMAYR, Erich, 85591 Vaterstetten (DE); SCHATTLEITNER, Angela, 83104 Tuntenhausen (DE)
(86) Internationale Anmeldenummer: PCT/EP2011/053420
(87) Internationale Veröffentlichungsnummer: WO 2011/131414

(56) Entgegenhaltungen:
- DE-A1- 19 953 739
- US-A1- 2005 211 777
- US-A1- 2009 237 245

## Beschreibung

Die Erfindung betrifft ein System und ein Verfahren zum Bereistellen von Sensordaten über einen Zustand einer Komponente, insbesondere einer Maschinenkomponente.

Maschinen innerhalb von technischen Anlagen werden zunehmend komplexer und verlangen zunehmende Fertigkeiten und Fähigkeiten bei ihrer Instandsetzung und Wartung durch einen Wartungstechniker. Servicetechniker, die Servicearbeiten, beispielsweise Reparatur- oder Wartungsmaßnahmen, an einer Maschine oder einem Gerät einer technischen Anlage durchzuführen haben, benötigen daher in vielen Fällen die Unterstützung eines technischen Experten für die jeweilige Maschine bzw. Maschinenkomponente, der sich in einem entfernt gelegenen Service-Center aufhält. Besteht beispielsweise ein Reparatur- oder Wartungsbedarf an einer komplexeren technischen Komponente, kann sich der vor Ort befindlicher Service-Techniker über eine Kommunikationsverbindung mit einem Mitarbeiter eines Service-Centers in Verbindung setzen, um dessen Unterstützung bei der notwendigen Reparatur- und Wartungsmaßnahme der Komponente zu erhalten. Damit der Experte bzw. der Mitarbeiter in dem Service-Center den Vorort befindlichen Techniker wirksam unterstützen kann, werden hierzu auch Sprach-, Bild- und Videodaten der Kommunikationsverbindung ausgetauscht. Dies ist insbesondere dann hilfreich, wenn ein mechanisches Bauteil oder eine mechanische Komponente betroffen ist, die durch den Wartungstechniker vor Ort zu warten bzw. zu reparieren ist. Weiterhin kann die Übertragung von Sprach-, Bild- oder Videodaten hilfreich sein, um bei einer Prozessautomatisierung bestimmte Abläufe zur Fehlereingrenzung zu beobachten. Der Wartungstechniker trägt dabei ein Fernwartungskommunikationsgerät mit sich, das beispielsweise Ton- oder Bilddaten der zu wartenden bzw. zu reparierenden Maschinenkomponente an das Service-Center über die Kommunikationsverbindung überträgt.

Bei vielen Anwendungsfällen finden sich die zu reparierenden bzw. zu wartenden Geräte bzw. Maschinenkomponenten auf einem Betriebsgelände eines Anlagenbetreibers bzw. Unternehmens. Innerhalb dieses Betriebsgeländes sind sensible betriebliche Daten oder personenbezogene Daten vor einem unerlaubten Zugriff Dritter zu schützen. Daher ist es in vielen Betrieben nicht erlaubt, Fernwartungskommunikationsgeräte, insbesondere Fernwartungskommunikationsgeräte, die über Kameras oder sonstige Sensoren verfügen, auf dem Betriebsgelände mit sich zu führen. Dies verhindert herkömmlicher Weise in vielen Fällen eine effiziente Unterstützung eines Wartungstechnikers durch einen Experten bzw. Mitarbeiter eines entfernt gelegenen Service-Centers.

Die Druckschrift US 2005/0211777 A1 offenbart ein System zur lokalen Inspektion von Aktivitäten an fernliegenden Orten, mit einem tragbaren Gerät, welches von einem Bediener an die fernliegenden Orte verbracht wird, und welches nur dann Daten verarbeiten kann, wenn sich das tragbare Gerät in physischer Nähe eines vorbestimmten fernliegenden Ortes befindet.

Die Druckschrift US 2009/0237245 A1 offenbart Systeme zur Inspektion von zu inspizierenden Komponenten, bei dem ein tragbares Gerät über kurze Distanz mit den Komponenten kommuniziert, um sicherzustellen, dass sich der mit der Inspektion beauftragte Nutzer des Geräts in der Nähe der Komponenten befindet.

Die Druckschrift DE 199 53 739 A1 offenbart ein System zur objektorientierten Markierung und Zuordnung von Informationen zu selektierten technologischen Komponenten eines zu wartenden Systems.

Es ist daher eine Aufgabe der vorliegenden Erfindung, ein mobiles Fernwartungskommunikationsgerät, ein System und ein Verfahren zu schaffen, die es ermöglichen, einen Nutzer bei seiner Tätigkeit auf einem Betriebsgelände gezielt durch einen Mitarbeiter eines Service-Centers zu unterstützen, ohne den Schutz betrieblicher oder personenbezogener Daten gegenüber einem unerlaubten Zugriff zu beeinträchtigen.

Diese Aufgabe wird erfindungsgemäß durch ein mobiles Fernwartungskommunikationsgerät mit den in Patentanspruch 1 angegebenen Merkmalen, ein System mit den in Patentanspruch 10 angegebenen Merkmalen und ein Verfahren mit den in Patentanspruch 12 angegebenen Merkmalen gelöst.

Die Erfindung schafft ein System zum Bereitstellen von Sensordaten über einen Zustand einer Komponente für einen Service-Center durch mindestens einen Sensor, der an einem dazu autorisierten mobilen Gerät vorgesehen ist, nachdem zwischen dem mobilen Gerät und der Komponente eine erfolgreiche Authentisierung erfolgt ist.

Bei der Komponente kann es sich beispielsweise um eine Maschinenkomponente einer Maschine handeln, die sich auf einem Betriebsgelände oder in einem sonstigen geschlossenen Bereich befindet. Bei der Maschinenkomponente kann es sich beispielsweise um ein mechanisches Bauteil einer Maschine handeln. Bei der Komponente kann es sich allerdings auch um immaterielle Komponenten handeln, beispielsweise einen zu wartenden Programmcode, der sich auf einem Datenträger, beispielsweise einer Festplatte befindet.

Bei dem mobilen Gerät handelt es sich um ein Fernwartungskommunikationsgerät, das von einem Nutzer bzw. Techniker getragen wird, der Wartungs- oder Reparaturmaßnahmen an der jeweiligen Komponente vorzunehmen hat.

Das mobile Gerät umfasst ein Nahfeld-Kommunikationsmodul, mittels dessen sich das mobile Gerät gegenüber der Komponente authentisiert oder mittels dessen sich die Komponente gegenüber dem mobilen Gerät authentisiert. Erfindungsgemäß weist das mobile Gerät eine Netzwerkschnittstelle auf, die zum Aufbau einer Kommunikationsverbindung mit dem Service-Center über ein Datennetzwerk vorgesehen ist.
Bei einer möglichen Ausführungsform des erfindungsgemäßen Systems handelt es sich bei dem Sensor um eine Kamera, die Bild- oder Videodaten der Komponente oder deren Umgebung liefert.
Weiterhin kann es sich bei dem Sensor um ein Mikrofon handeln, das Geräuschdaten der Komponente aufnimmt.
Bei einer weiteren möglichen Ausführungsform ist der Sensor ein Mikrofon, das Sprachdaten eines Nutzers, welcher das mobile Gerät trägt, erfasst.
Bei einer möglichen Ausführungsform des erfindungsgemäßen Systems können auch weitere Sensoren in dem mobilen Gerät vorgesehen sein, beispielsweise Sensoren, die physikalische Parameter der Komponente erfassen, beispielsweise Temperatur- oder Drucksensoren. Erfindungsgemäß werden die von den verschiedenen Sensoren des mobilen Geräts bereitgestellten Sensordaten entsprechend der Autorisierung des mobilen Gerätes beschränkt von dem mobilen Gerät an das Service-Center übertragen.
Bei einer möglichen Ausführungsform des erfindungsgemäßen Systems erfolgt die Beschränkung der von dem mobilen Gerät an das Service-Center übertragenen Sensordaten hinsichtlich der Art der Sensordaten, welche beispielsweise Bilddaten, Videodaten, Geräuschdaten und Sprachdaten umfassen.
Bei einer weiteren möglichen Ausführungsform des erfindungsgemäßen Systems erfolgt die Beschränkung der von dem mobilen Gerät an das Service-Center übertragenen Sensordaten hinsichtlich eines aktuellen Aufenthaltsortes des mobilen Gerätes.
Bei einer weiteren möglichen Ausführungsform des erfindungsgemäßen Systems erfolgt die Beschränkung der von dem mobilen Gerät an das Service-Center übertragenen Sensordaten hinsichtlich eines Zeitpunktes der Erzeugung der Sensordaten durch den jeweiligen Sensor.
Bei einer weiteren möglichen Ausführungsform des erfindungsgemäßen Systems erfolgt die Beschränkung der von dem mobilen Gerät an das Service-Center übertragenen Sensordaten hinsichtlich der Komponente, die von dem Sensor sensorisch erfasst wird.
Die jeweilige Beschränkung der von dem mobilen Gerät an das Service-Center übertragenen Sensordaten erfolgt in jedem Falle in Abhängigkeit von der für das mobile Gerät bestehenden Autorisierung.Erfindungsgemäß erfolgt die Authentisierung zwischen dem mobilen Gerät und der Komponente mittels eines kryptographischen Authentisierungsverfahrens, insbesondere eines kryptographischen Challenge-Response-Verfahrens.
Bei einer möglichen Ausführungsform des erfindungsgemäßen Systems authentisiert sich das mobile Gerät oder ein Nutzer, der das mobile Gerät trägt, gegenüber dem Service-Center.
Bei einer möglichen Ausführungsform des erfindungsgemäßen Systems erfolgt die Authentisierung des Nutzers, welcher das mobile Gerät trägt, gegenüber dem Service-Center anhand von biometrischen Körpermerkmalen des Nutzers.

Bei einer weiteren möglichen Ausführungsform des erfindungsgemäßen Systems erfolgt die Authentisierung des Nutzers, welcher das mobile Gerät trägt, gegenüber dem Service-Center anhand der mittels eines Mikrofons sensorisch erfassten Sprache des Nutzers.
Bei einer möglichen Ausführungsform des erfindungsgemäßen Systems ist das mobile Gerät ein Fernwartungskommunikationsgerät, das von einem Wartungstechniker als Nutzer getragen wird und das den Zustand einer zu wartenden oder zu reparierenden Komponente mittels darin integrierter Sensoren erfasst.
Bei einer möglichen Ausführungsform des erfindungsgemäßen Systems werden die von dem mobilen Gerät über das Datennetzwerk an das Service-Center übertragenen Sensordaten des Zustandes der Komponente in dem Service-Center einem Experten zur Verfügung gestellt, welcher über das Datennetzwerk Instruktionen an den Nutzer, welcher das mobile Gerät trägt, zurück überträgt.Erfindungsgemäß wird mittels des Nahfeld-Kommunikationsmoduls des mobilen Gerätes ein RFID-Tag, welches an der Komponente angebracht ist, drahtlos ausgelesen, wobei in dem Tag beispielsweise eine Komponenten-ID der Komponente gespeichert sein kann.
Bei einer möglichen Ausführungsform des erfindungsgemäßen Systems ist in dem mobilen Gerät ein konfigurierbarer Zugriffskontrollspeicher vorgesehen, in welchem Komponenten-IDs von denjenigen Komponenten gespeichert sind, für welche der Nutzer des mobilen Gerätes autorisiert ist, eine bestimmte Wartungs- oder Reparaturmaßnahme durchzuführen.

Dabei werden vorzugsweise nur Sensordaten von denjenigen Komponenten von dem mobilen Gerät des Nutzers zu dem Service-Center übertragen, für welche der jeweilige Nutzer autorisiert ist.

Die Erfindung schafft ein mobiles Fernwartungskommunikationsgerät zur Wartung einer Komponente, mit Sensoren, die Sensordaten über den Zustand der Komponente an ein Service-Center übertragen, falls das mobile Fernwartungskommunikationsgerät dazu autorisiert ist und zwischen dem mobilen Fernwartungskommunikationsgerät und der zu wartenden Komponente eine erfolgreiche Authentisierung erfolgt ist.

Die Erfindung schafft ferner ein Verfahren mit den in Patentanspruch 12 angegebenen Merkmalen.

Die Erfindung schafft ein Verfahren zum Bereitstellen von Sensordaten über einen Zustand einer Komponente für ein Service-Center durch Sensoren, die an einem dazu autorisierten mobilen Gerät vorgesehen sind, nachdem zwischen dem mobilen Gerät und der Komponente eine erfolgreiche Authentisierung erfolgt ist.

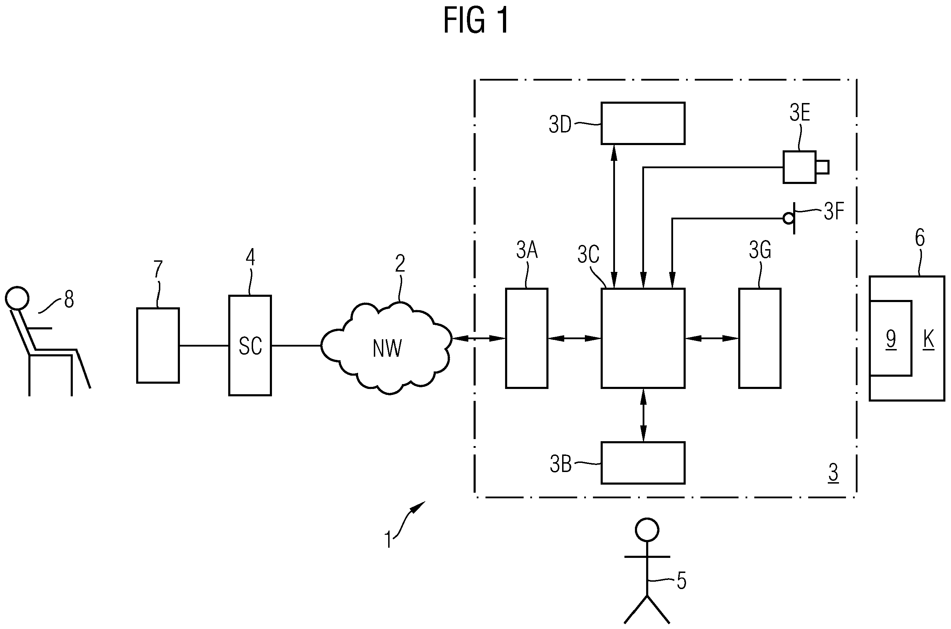

Im Weiteren werden bevorzugten Ausführungsformen des erfindungsgemäßen Systems, des erfindungsgemäßen Fernwartungskommunikationsgerät es sowie des erfindungsgemäßen Verfahrens zum Bereitstellen von Sensordaten unter Bezugnahme auf die beigefügten Figuren zur Erläuterung möglicher Ausführungsformen beschrieben.
Es zeigen:
- Fig. 1: ein Blockschaltbild zur Darstellung einer möglichen Ausführungsform des erfindungsgemäßen Systems zum Bereitstellen von Sensordaten;
- Fig. 2: ein mögliches Anwendungsszenario des erfindungsgemäßen Systems zur Bereitstellung von Sensordaten;
- Fig. 3: ein Ablaufdiagramm zur Darstellung einer möglichen Ausführungsform des erfindungsgemäßen Verfahrens zum Bereitstellen von Sensordaten;
- Fig. 4A, 4B: Ablaufdiagramme zur Darstellung eines weiteren Ausführungsbeispiels des erfindungsgemäßen Verfahrens zum Bereitstellen von Sensordaten.
Wie man aus Fig. 1 erkennen kann, umfasst ein erfindungsgemäßes System 1 zum Bereitstellen von Sensordaten ein Datennetzwerk 2, über das ein mobiles Gerät 3 mit einem Server 4 eines Service-Centers SC eine Kommunikationsverbindung aufbauen kann. Bei dem mobilen Gerät 3 handelt es sich um ein Fernwartungskommunikationsgerät eines Nutzers, beispielsweise eines Wartungstechnikers 5. Der Nutzer 5 trägt das mobile Gerät 3 mit sich, um an einer Komponente 6 eine Servicemaßnahme durchzuführen. Bei dieser Servicemaßnahme handelt es sich beispielsweise um eine Wartungs- oder Reparaturmaßnahme. An dem Service-Center SC kann ein Terminal 7 angeschlossen sein, über das ein Mitarbeiter des Service-Centers SC, beispielsweise ein technischer Experte 8, mit dem mobilen Gerät 3 des Nutzers 5 kommuniziert.

Bei dem in Fig. 1 dargestellten Ausführungsbeispiel weist das mobile Gerät 3 eine Netzwerkschnittstelle 3A auf, um eine Kommunikationsverbindung mit dem Datennetzwerk 2 herzustellen. Bei der Netzwerkschnittstelle 3A kann es sich um eine drahtgebundene oder drahtlose Schnittstelle handeln. Vorzugsweise ist die Schnittstelle 3A eine drahtlose Schnittstelle, damit der Nutzer 5 das mobile Gerät 3 problemlos mit sich führen bzw. an seinem Körper tragen kann. Das mobile Gerät 3 verfügt über eine Nutzerschnittstelle 3B, die von dem Nutzer 5 bedient werden kann. Die Netzwerkschnittstelle 3A sowie die Nutzerschnittstelle 3B sind mit einer Datenverarbeitungseinheit 3C des mobilen Gerätes 3 verbunden. Die Datenverarbeitungseinheit 3C des mobilen Gerätes 3 kann einen oder mehrere Mikroprozessoren zur Ausführung eines Steuerprogramms aufweisen. Die Datenverarbeitungseinheit 3C hat Zugriff auf einen Datenspeicher 3D, in dem Daten abspeicherbar sind. Ferner sind bei dem in Fig. 1 dargestellten Ausführungsbeispiel Sensoren mit der Datenverarbeitungseinheit 3C verbunden. Beispielsweise verfügt das mobile Gerät 3 über eine Kamera 3E, die Bild- oder Videodaten an die Datenverarbeitungseinheit 3C liefert. Weiterhin kann das mobile Gerät 3 über ein Mikrofon 3F verfügen, das Geräuschdaten der Komponente 6 liefert.

Darüber hinaus verfügt das mobile Gerät 3 gemäß der Erfindung über ein Nahfeld-Kommunikationsmodul 3G mittels dessen sich das mobile Gerät 3 gegenüber der Komponente 6 authentisiert oder mittels dessen sich die Komponente 6 gegenüber dem mobilen Gerät 3 authentisiert. Bei einer möglichen Ausführungsform ist an der Komponente 6, beispielsweise einer Maschinenkomponente, ein Tag 9 angebracht, welches mittels des Nahfeld-Kommunikationsmoduls 3G des mobilen Gerätes 3 drahtlos auslesbar ist. Auf dem Tag 9 der Komponente 6 kann beispielsweise eine Komponenten-ID der Komponente 6 abgespeichert sein und ausgelesen werden. Bei einer möglichen Ausführungsform handelt es sich bei dem Tag 9 um ein RFID-Tag, das durch ein in dem mobilen Gerät 3 integriertes RFID-Lesegerät als Nahfeld-Kommunikationsmodul 3G auslesbar ist. Bei dieser Ausführungsform des mobilen Gerätes 3 ist somit das Nahfeld-Kommunikationsmodul 3G ein RFID-Kommunikationsmodul bzw. ein RFID-Lesegerät. Bei einer alternativen Ausführungsform weist das Nahfeld-Kommunikationsmodul 3G des mobilen Gerätes 3 ein Bluetooth-Kommunikationsmodul, ein ZigBee-Kommunikationsmodul oder ein IEEE802.15.4-Kommunikationsmodul auf. Erfindungsgemäß ist das mobile Gerät 3 ein Fernwartungskommunikationsgerät mit einer integrierten RFID-Leseeinheit 3G, die über ein Funkprotokoll zur Nahfeld-Kommunikation mit dem RFID-Tag 9 kommuniziert, das in der zu wartenden oder der zu reparierenden Komponente 6 eingebaut sein kann. Bei dem RFID-Tag 9 handelt es sich vorzugsweise um ein passives RFID-Tag. Bei einer möglichen Ausführungsform wird das RFID-Tag 9 in regelmäßigen Zeitabständen von dem Fernwartungskommunikationsgerät 3 abgefragt.Erfindungsgemäß authentisiert sich das RFID-Tag 9 in regelmäßigen Zeitabständen gegenüber dem mobilen Gerät 3 über ein kryptographisches Authentisierungsverfahren, beispielsweise über ein kryptographisches Challenge-Response-Protocol. Kann die vom RFID-Tag 9 gelieferte Response nicht verifiziert werden, so wird die Kommunikation zwischen dem Nahfeld-Kommunikationsmodul 3G und dem Tag 9 für einen längeren Zeitraum unterbrochen und es kann eine Beschränkung der von dem mobilen Gerät 3 an das Service-Center 4 übertragenen Sensordaten erfolgen. Die Beschränkung kann in einer vollständigen Unterbindung der übertragenen Sensordaten bestehen oder sogar in einem vollständigen Abschalten des mobilen Gerätes 3.
Nachdem eine erfolgreiche Authentisierung zwischen dem Nahfeld-Kommunikationsmodul 3G des mobilen Gerätes 3 und dem Tag 9 der zu wartenden oder zu reparierenden Komponente 6 erfolgt ist, kann das mobile Wartungsgerät 3 für die Übertragung von Sensordaten an das entfernte Service-Center 4 freigeschaltet werden. Nach Aufbau der Kommunikationsverbindung zu dem Service-Center 4 kann sich der Nutzer 5, der sich vor Ort bei der zu wartenden Komponente 6 befindet, bei dem Service-Center-Betreiber über das Datennetzwerk 2 anmelden. Bei einer möglichen Ausführungsform stellt die Netzwerkschnittstelle 3A eine Funkverbindung zu einer Basisstation eines Zugangsnetzwerkes her, das seinerseits über ein oder mehrere Datennetzwerke mit dem Service-Center 4 verbunden ist.

Bei einer möglichen Ausführungsform muss sich der Nutzer 5 bzw. der Wartungstechniker gegenüber dem Service-Center 4 authentisieren bevor Sensordaten an das Service-Center 4 übertragen werden können. Diese Authentisierung des Nutzers 5 gegenüber dem Service-Center 4 kann bei einer möglichen Ausführungsform anhand von geometrischen Körpermerkmalen des Nutzers 5 erfolgen. Bei einer weiteren möglichen Ausführungsform erfolgt die Authentisierung des Nutzers 5 gegenüber dem Service-Center 4 anhand von sensorisch erfassten Sprachdaten des Nutzers 5. Beispielsweise erfolgt innerhalb des mobilen Gerätes 3 zunächst eine Sprecherverifikation des Wartungstechnikers 5, der in ein Mikrofon der Nutzerschnittstelle 3B spricht. Alternativ kann die Sprecherverifikation kann auch in dem Service-Center 4 anhand übertragenen Sprachdaten erfolgen. Bei einer weiteren möglichen Ausführungsform erfolgt die Authentisierung des Nutzers 5 gegenüber dem Service-Center 4 anhand eines Fingerprints oder anhand eines Iris-Scan. Bei einer möglichen Ausführungsform hat der Nutzer 5 seine biometrischen Daten in einem sogenannten Enrollement-Verfahren bei dem Betreiber des Service-Centers 4 hinterlegt. Weiterhin kann eine Security-Association zwischen dem mobilen Gerät 3 und dem Service-Center 4 aufgebaut sein, beispielsweise eine VPN- oder UMTS-Security-Association. Hierüber können sowohl die biometrischen Authentisierungsdaten für die Authentisierung des Nutzers 5 gegenüber dem Service-Center 4 als auch Autorisierungsdaten abhör- und fälschungssicher übertragen werden. Die Autorisierungsdaten können mögliche Beschränkungen bei der Übertragung der Sensordaten von dem mobilen Gerät 3 an das Service-Center 4 angeben. Hat sich der Nutzer 5 gegenüber dem Service-Center 4 erfolgreich authentisiert, so kann die Autorisierung des Mitarbeiters bzw. Nutzers 5 vor Ort stattfinden. Dabei kann ein hinterlegtes Zugriffsprofil, welches beispielsweise Zugriffsrechte oder Zugriffsrollen umfasst, mit dem von dem Nutzer 5 gewünschten an der Komponente 6 zu erbringenden Service bzw. Dienstleistung abgeglichen werden, wobei die Erbringung des gewünschten Dienstes erlaubt oder abgebrochen werden kann. Dabei können neben der verifizierten Identität optional weitere Daten von dem autorisierten Dienst ausgewertet werden, beispielsweise eine ID des mobilen Gerätes 3, eine ID der zu wartenden Komponente 6, eine gewünschte Kontaktperson bzw. Experte sowie eine gewünschte Verbindungsart, beispielsweise Audio, Video oder Einzelbild. Ferner ist es möglich, dass Integritätsmerkmale des mobilen Endgerätes 3 verifiziert werden, beispielsweise durch Überprüfung von Softwaresignaturen einer RFID-Lesesoftware.

Bei der in Fig. 1 dargestellten Ausführungsform ist das Tag 9 an der zu wartenden Komponente 6 angebracht und wird durch ein Nahfeld-Kommunikationsmodul 3G, beispielsweise ein RFID-Lesegerät, ausgelesen. Bei einer alternativen Ausführungsform verfügt das mobile Gerät 3 über ein Tag, beispielsweise ein RFID-Tag und die zu wartende Maschinenkomponente 6 weist ein RFID-Lesegerät auf. Bei dieser Ausführungsform ist die zu wartende Maschinenkomponente 6 über eine Fernwartungsdatenverbindung an das Service-Center 4 angeschlossen. Bei dieser Ausführungsform wird das mobile Gerät 3 des Servicetechnikers 5 ebenfalls mit dem Service-Center 4, beispielsweise einer Wartungszentrale, verbunden und der Service-Techniker 5 authentisiert sich gegenüber dem Service-Center 4 beispielsweise mittels eines biometrischen Authentisierungsverfahrens.

Kommt bei dieser Ausführungsform der Servicetechniker 5 mit seinem tragbaren mobilen Gerät 5 in die räumliche Nähe der Komponente 6, kann das RFID-Tag des mobilen Gerätes 3 ausgelesen bzw. authentisiert werden. Ist bei dieser Ausführungsform die empfangene ID des mobilen Gerätes 3, die in dem Speicher 3D abgelegt sein kann, in der zu wartenden Anlage bzw. Maschinenkomponente 6 als zugriffsberechtigt administriert, kann ein Kommunikationsmodul der zu wartenden Anlage über die separate Wartungsverbindung diese Informationsdaten an das Service-Center 4 bzw. das Wartungszentrum übertragen. Wenn das mobile Gerät 3 des Servicetechnikers 5 ebenfalls mit dem Service-Center 4 verbunden ist, kann bei dieser Ausführungsform das Wartungszentrum 4 einen oder mehrere Sensoren des mobilen Gerätes 3, beispielsweise die Kamera 3E, freigeben.

Bei einer weiteren möglichen Ausführungsform empfängt das mobile Gerät 3 des Servicetechnikers 5 über das Datennetzwerk 2 ein sogenanntes Ticket (Kerberos, SAML: Security Assertion Markup Language), in welchem Informationsdaten zu den zu wartenden Komponenten bzw. Geräten 6 sowie eine Technikerkennung enthalten sein kann. Das Ticket kann beispielsweise eine Geräte- bzw. Komponenten-ID der zu wartende Komponente 6 enthalten. Bei einer möglichen Ausführungsform wird das Ticket von dem mobilen Gerät 3 angefordert. Alternativ kann das Ticket über einen existierenden Übertragungskanal gesendet, und lokal per Drahtlosverbindung an das mobile Gerät 3 übermittelt werden. Auf dem mobilen Gerät 3 wird dazu das empfangene Ticket mit einer lokalen Authentisierung des Servicetechnikers 5 sowie der empfangenen Komponenten-ID verglichen. Bei Übereinstimmung der Rechte und erfolgreiche Authentisierung wird ein Zugriff auf einen Sensor, beispielsweise die Kamera 3E, freigeschaltet.

Bei den bisher beschriebenen Ausführungsvarianten erfolgt die Authentisierung zwischen dem mobilen Gerät 3 und der Komponente 6 mittels eines Nahfeld-Kommunikationsmoduls bzw. durch Kommunikation zwischen einem RFID-Lesegerät und einem RFID-Tag. Bei alternativen Ausführungsformen kann die Authentisierung zwischen dem mobilen Gerät 3 und der Komponente 6 mittels anderer Verfahren erfolgen, beispielsweise durch einen Abgleich von Ortskoordinaten eines aktuellen Aufenthaltsortes des mobilen Gerätes 3 und einem Aufstellungsort der zu wartenden Komponente 6. Bei einer möglichen Ausführungsform weist hierzu das mobile Gerät 3 ein GPS-Modul auf, über das es lokalisiert werden kann. Stimmen die Raumkoordinaten des mobilen Gerätes 3 annähernd mit den Raumkoordinaten der zu wartenden bzw. zu reparierenden Komponente 6 überein, die beispielsweise anhand der Komponenten-ID identifiziert ist, befindet sich der Servicetechniker 5 bei der richtigen Komponente 6 und der Authentisierungsvorgang ist erfolgreich abgeschossen. Ferner kann auch eine Lokalisierung des mobilen Gerätes 3 mittels WLAN oder Triangulation erfolgen.

Bei dem in Fig. 1 dargestellten Ausführungsbeispiel verfügt das mobile Gerät 3 über zwei Sensoren 3E, 3F zur Übertragung von Sensordaten an das Service-Center 4. Durch die Kamera 3E können Bild- oder Videodaten der Komponente 6 übertragen werden. Bei der Komponente 6 kann es sich beispielsweise um eine Turbinenschaufel einer Turbine handeln. In einer derartigen Turbinenschaufel können beispielsweise Haarrisse entstehen. Der Servicetechniker 5 kann auf diese Weise ein Bild über den Zustand der Turbinenschaufel visuell an einen im Service-Center 4 befindlichen Mitarbeiter bzw. Experten übertragen. Bei dem in Fig. 1 dargestellten Ausführungsbeispiel ist die Kamera 3E über eine drahtgebundene Schnittstelle mit der Datenverarbeitungseinheit 3C des mobilen Gerätes 3 verbunden. Bei einer möglichen Ausführungsform ist die Kamera 3E des mobilen Gerätes 3 über eine drahtlose Schnittstelle mit dem mobilen Gerät 3 verbunden.

Sobald der Experte 8 in dem Service-Center 4 die Bilddaten von der zu wartenden Turbinenschaufel 6 erhält, kann er dem Servicetechniker 5 vor Ort Instruktionen über das Datennetzwerk 2 geben. Diese Instruktionen können beispielsweise Sprachbefehle sein. Weiterhin ist es möglich, dass der Experte 8 im Service-Center 4 auf eine Datenbank zugreift und dem Servicetechniker 5 Daten, die Informationen über die zu wartende Komponente 6 enthalten, überträgt, beispielsweise Baupläne oder Geometriedaten der Turbinenschaufel 6. Derartige Daten können beispielsweise auf einem Display des mobilen Gerätes 3 dem Servicetechniker 5 angezeigt werden.

Bei einer möglichen Ausführungsform trägt der Servicetechniker ein Headset, an dem die Kamera 3E angebracht ist. Weiterhin kann an dem Headset ein Mikrofon der Nutzerschnittstelle 3B angebracht sein, über das der Nutzer 5 mit dem Experten 8 kommunizieren kann, beispielsweise indem er entsprechende Fragen stellt. Das mobile Gerät 3 kann, wie in Fig. 1 dargestellt, ferner ein Mikrofon 3F aufweisen, mit dem Geräuschdaten der zu wartenden Maschinenkomponente 6 aufgenommen werden. Bei einer möglichen Ausführungsform werden die aufgezeichneten Bild-, Video- und Audiodaten zusätzlich in dem lokalen Speicher 3D des mobilen Gerätes 3 zur späteren Auswertung aufgezeichnet. Zur Speicherung der Daten kann alternativ oder zusätzlich auch an dem Service-Center 4 erfolgen.

Bei einer möglichen Ausführungsform verfügt das mobile Gerät 3 neben dem Datenspeicher 3D über einen konfigurierbaren Zugriffskontrollspeicher, bei welchem verschiedene Komponenten-ID's von denjenigen Komponenten 6 gespeichert sind, für welche der Service-Techniker bzw. Nutzer 5 des jeweiligen mobilen Gerätes 3 autorisiert ist, eine Wartungs- oder Reparaturmaßnahme durchzuführen. Bei dieser Ausführungsform werden nur Sensordaten von denjenigen Komponenten 6 von dem mobilen Gerät 3 des Nutzers 5 zu dem Service-Center 4 übertragen, für welche der Nutzer 5 autorisiert ist bzw. die entsprechenden Übertragungsrechte besitzt.

Die Beschränkung der von dem mobilen Gerät 3 an das Service-Center 4 übertragenen Sensordaten kann entsprechend der bestehenden Autorisierung des jeweiligen Service-Technikers 5 unterschiedlich erfolgen. Einerseits kann die Beschränkung der übertragenen Sensordaten hinsichtlich deren Art erfolgen. Beispielsweise kann ein bestimmter Servicetechniker 5 von einer bestimmten Maschinenkomponente 6 nur Geräuschdaten aber keine Bilddaten übertragen.

Weiterhin kann die Beschränkung der übertragenen Sensordaten hinsichtlich eines aktuellen Aufenthaltsortes des mobilen Gerätes 3 stattfinden. Beispielsweise darf das mobile Gerät 3 nur sensorisch erfasste Daten an das Service-Center 4 übertragen, sofern es sich in einem bestimmten Gebiet befindet oder in der Nähe einer bestimmten Maschinenkomponente 6, beispielsweise in einem Umkreis von 10m.

Weiterhin kann die Beschränkung der übertragenen Sensordaten hinsichtlich eines Zeitpunktes der Erzeugung der Sensordaten durch den Sensor erfolgen. Beispielsweise darf ein Servicetechniker 5 nur Sensordaten übertragen, die er während eines bestimmten Zeitraumes erzeugt, beispielsweise während der Öffnungszeiten des Betriebes oder Unternehmens, in dem die Maschinenkomponente 6 steht.

Weiterhin kann die Beschränkung der übertragenen Sensordaten hinsichtlich der Komponente 6 erfolgen, die durch den Sensor sensorisch erfasst wird. Beispielsweise darf der Servicetechniker 5 nur Sensordaten einer Maschinenkomponente mit einer bestimmten Maschinenkomponenten-ID an das Service-Center 4 übertragen.

Nähert sich der Servicetechniker 5 mit dem mobilen Gerät 3 beispielsweise zu einer verbotenen geheimen Maschinenkomponente 6 kann bei einer möglichen Ausführungsform das mobile Gerät 3 automatisch deaktiviert werden. Auf diese Weise ist dem Anlagenbetreiber die Möglichkeit gegeben, zu definieren, welche Maschinenkomponenten 6 der Anlage mit einem Fernwartungskommunikationsgerät 3 gewartet werden dürfen und für welche Maschinenkomponenten dies nicht erlaubt ist. Hierdurch kann die Sicherheit gegenüber ungewollter Verbreitung von Betriebsgeheimnissen erhöht werden. Die Beschränkung der Übertragung der Sensordaten durch das mobile Endgerät 3 sowie des zugelassenen Benutzerkreises als auch die räumliche Ausdehnung eines möglichen Einsatzes des mobilen Gerätes 3 ermöglicht den Einsatz eines mobilen Fernwartungskommunikationsgerät es zur Audio- und Videoübertragung an ein entferntes Service-Center 4 ohne die Sicherheit beim Schutz firmeninterner Daten zu reduzieren.

Bei einer möglichen Ausführungsform ist die zulässige Reichweite für eine erfolgreiche Authentisierung zwischen dem mobilen Gerät 3 und der zu wartenden Komponente 6 einstellbar. Beispielsweise kann die zulässige Reichweite Millimeter oder einige Zentimeter oder einige Meter betragen. Für diese Ausführungsform ist ein zulässiger Arbeitsbereich des Servicetechnikers 5 flexibel einstellbar.

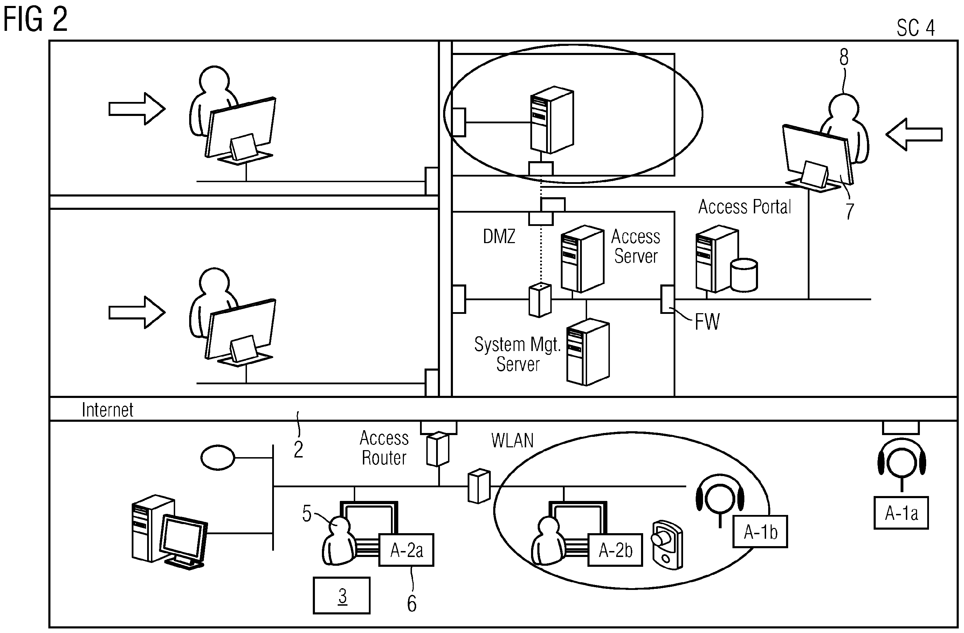

Die Fig. 2 zeigt ein Anwendungsszenario für das erfindungsgemäße System 1. Bei diesem Anwendungsszenario befindet sich ein Servicetechniker 5 mit seinem mobilen Gerät 3 in der Anlage eines Anlagenbetreibers beispielsweise in der Nähe einer zu wartenden Komponente 6, die über ein lokales Netzwerk und einen Zugangsrouter (Access Router) über das Internet mit einem Service-Center 4 verbunden ist. Ein Experte 8 sitzt an einem Terminal 7, das an einem lokalen Netzwerk des Service-Center-Betreibers angeschlossen ist. Über ein Zugangsportal und einen Firewall FW ist dieses lokale Netzwerk des Service-Centers 4 ebenfalls mit dem Internet 2 verbunden. Zwischen einem Zugangsserver (Access Server) des Service-Centers 4 und dem Zugangsrouter des Kundennetzwerkes kann ein RemoteServicezugang, beispielsweise ein VPN-Tunnel aufgebaut sein, der eine sichere Datenübertragung zwischen dem Service-Center 4 und dem mobilen Gerät 3 des Nutzers 5 erlaubt. Bei einer möglichen Ausführungsform ist das mobile Gerät 3 in einem Kleidungsstück des Nutzers 5 integriert. Beispielsweise ist das mobile Gerät 3 an einer Mütze oder Kappe oder einem Helm des Nutzers 5 integriert und überträgt über eine drahtlose Schnittstelle Sensordaten über den VPN-Tunnel an das Netzwerk des Service-Centers 4.

Bei einer möglichen Ausführungsform sind, wie in Fig. 2 dargestellt, an das Datennetzwerk 2 bzw. das Internet weitere Service-Center bzw. Dienstleistungsanbieter angeschlossen. Bei einer möglichen Ausführungsform werden die von dem mobilen Gerät 3 gelieferten Sensordaten je nach Bedarf an verschiedene Service-Center SC geroutet. Beispielsweise kann das Routing der Sensordaten in Abhängigkeit der jeweiligen zu wartenden Maschinenkomponente 6 erfolgen.

Bei einer möglichen Ausführungsform authentisiert sich nicht nur der Servicetechniker 5 gegenüber dem Service-Center 4, sondern auch ein Mitarbeiter des Service-Centers 4 gegenüber dem vor Ort befindlichen Servicetechniker 5, um die Sicherheit gegenüber Fehlweisungen bzw. Missverständnissen zu erhöhen. Erst nach gegenseitiger Authentisierung erfolgt dann eine Übertragung der Sensordaten an das Service-Center 4 und eine Zurückübertragung entsprechender Serviceinstruktionen durch den Mitarbeiter 8 des Service-Centers 4 an den Nutzer 5 bzw. den Servicetechniker.

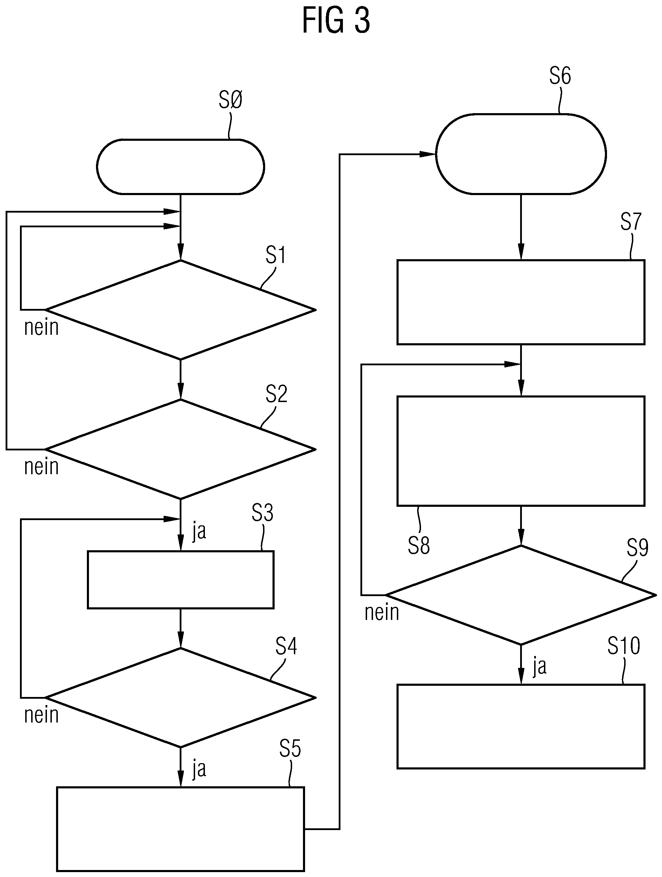

Fig. 3 zeigt ein Ablaufdiagramm einer möglichen Ausführungsform des erfindungsgemäßen Verfahrens zum Bereitstellen von Sensordaten. Bei der in Fig. 3 dargestellten Ausführungsvariante befindet sich das Tag 9 an der zu wartenden Maschinenkomponente 6. Bei dieser Variante erfolgt die Freischaltung eines Sensors, beispielsweise der Kamera 3E in Abhängigkeit einer empfangenen RFID-Kennung des Tags 9. Bei dieser Ausführungsvariante ist in dem mobilen Endgerät 3 eine Liste mit Gerätekennungen bzw. Komponentenkennungen verfügbar, welche angibt, welche Komponenten 6 durch das mobile Gerät 3 aufgenommen werden dürfen.

Nach einem Startschritt S0 wird zunächst in einem Schritt S1 geprüft, ob das Tag 9 sich in der Reichweite des Nahfeld-Kommunikationsmoduls 3G des mobilen Gerätes 3 befindet. Ist dies der Fall wird in einem Schritt S2 geprüft, ob sich die Kennung der Komponente 6, die aus dem Tag 9 ausgelesen wird, in der Zugriffskontrollliste befindet. Ist dies der Fall, erfolgt eine Authentisierung in einem Schritt S3 über das RFID-Tag 9. In einem weiteren Schritt S4 wird entschieden, ob die Authentisierung erfolgreich abgeschlossen worden ist. Nach erfolgreicher Authentisierung der Maschinenkomponente 6 gegenüber dem mobilen Gerät 3 erfolgt beispielsweise in einem Schritt S5 ein lokales Freischalten eines in dem mobilen Gerät 3 befindlichen Sensors, beispielsweise der Kamera 3E. Ferner wird ein Verbindungsaufbau zum Aufbau einer Kommunikationsverbindung zu dem Service-Center 4 im Schritt S5 durchgeführt. Falls der Sensor freigeschaltet wird, kann in einem Schritt S6 die Verbindung zu dem Service-Center 4 aufgebaut werden. Weiterhin wird in einem Schritt S7 beispielsweise ein VPN-Tunnel zur sicheren Datenübertragung gebildet. Sobald die Verbindung zu dem Service-Center 4 besteht, wird vorzugsweise eine Nutzer-Authentisierung durchgeführt. In dem Schritt S8 authentisiert sich dabei der Servicetechniker 5, beispielsweise durch biometrische Verfahren, gegenüber dem Service-Center 4. In einem Schritt S9 wird entschieden, ob die Authentisierung erfolgreich abgeschlossen worden ist. Nach erfolgreicher Nutzer-Authentisierung werden die von dem Sensor, beispielsweise der Kamera 3E gelieferten Sensordaten im Schritt S10 an das Service-Center 4 übertragen.

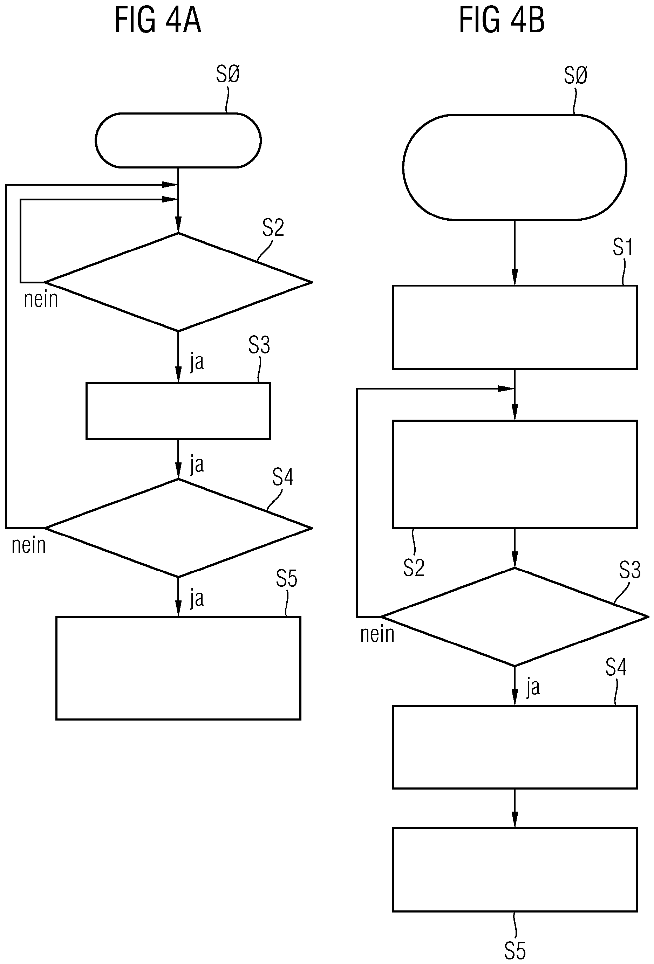

Die Fig. 4A, 4B zeigen Ablaufdiagramme zur Darstellung einer weiteren Ausführungsvariante des erfindungsgemäßen Verfahrens. Bei dieser Variante befindet sich das Nahfeld-Kommunikationsmodul, beispielsweise ein RFID-Lesegerät, an der zu wartenden Komponente 6 und ein entsprechendes Tag befindet sich an dem mobilen Gerät 3. Der in Fig. 4A dargestellte Ablauf erfolgt auf Seiten der zu wartenden Komponente 6. Der in Fig. 4B dargestellte Ablauf erfolgt auf Seiten des Fernwartungskommunikationsgerätes 3.

Wie in Fig. 4A dargestellt, erfolgt nach einem Start der Wartungsmaßnahme im Schritt S0 durch das in der Komponente 6 befindliche Lesegerät eine Überprüfung, ob sich ein RFID-Tag eines mobilen Fernwartungskommunikationsgerätes 3 in seiner Reichweite an ist. Ist dies der Fall, erfolgt im Schritt S3 eine Authentisierung über das RFID-Tag. Wird im Schritt S4 entschieden, dass die Authentisierung erfolgreich abgeschlossen ist, kann in einem Schritt S5 eine Kennung bzw. ID des mobilen Gerätes 3 über eine existierende separate Wartungsverbindung der Maschinenkomponente 6 zu dem Service-Center 4 übertragen werden.

Wie in Fig. 4B dargestellt, wird bei der auf dem Wartungsgerät 3 ablaufenden Prozedur zunächst eine Verbindung von dem mobilen Gerät 3 zu dem Service-Center 4 im Schritt S0 aufgebaut. Weiterhin wird in einem Schritt S1 vorzugsweise ein VPN-Tunnel zu dem Service-Center 4 gebildet. Anschließend authentisiert sich der Servicetechniker 5, beispielsweise durch ein biometrisches Verfahren, gegenüber dem Service-Center 4 im Schritt S2. Wird im Schritt S3 erkannt, dass die Authentisierung erfolgreich abgeschlossen ist, werden in einem Schritt S4 die Zugriffsrechte des Servicetechnikers 5 mit Hilfe der empfangenen ID im Schritt S4 abgeglichen. Schließlich erfolgt im Schritt S5 eine Freischaltung des Sensors, beispielsweise der Kamera 3E durch das Service-Center 4. Der Abgleich der Zugriffsrechte im Schritt S4 kann beispielsweise an dem Service-Center 4 erfolgen.

Das erfindungsgemäße System 1 erlaubt die Bereitstellung von universell einsetzbaren Endgeräten bzw. Fernwartungskommunikationsgeräten 3 zur Audio- und Videoübertragung, beispielsweise mit Hilfe hochauflösender Kameras, auf einem Kommunikationskanal über eine Betriebs- bzw. Firmengrenze hinweg. Das erfindungsgemäße System 1 minimiert ein potentielles Sicherheitsrisiko für zu schützende, firmeninterne Daten. Das erfindungsgemäße System 1 eignet sich zur Fernwartung oder Ferndiagnose bei beliebigen Komponenten 6, insbesondere Maschinenkomponenten.

Bei den Sensoren kann es sich ebenfalls um verschiedene Arten von Sensoren handeln, insbesondere Video- oder Audiosensoren. Darüber hinaus können die Sensoren des mobilen Gerätes 3 auch physikalische Parameter der Komponente 6 erfassen, beispielsweise Temperatur, Druck etc.#

Bei den oben beschriebenen Ausführungsbeispielen sind die Sensoren Videosensoren bzw. Mikrofone oder Kameras, die Audio- bzw. Videodaten liefern. Bei einer weiteren möglichen Ausführungsform können die Sensoren des mobilen Gerätes 3 auch an die zu wartende Komponente 6 angebracht oder sogar an die zu wartende Komponente 6 angeschlossen werden. Weiterhin kann es sich bei den Sensoren 6 um nicht invasive Sensoren aber auch um invasive Sensoren handeln. Beispielsweise können die Sensoren auch in die zu wartende Komponente 6 eingeführt werden. Beispielsweise kann es sich bei der zu wartenden Komponente 6 auch um einen chemischen Stoff handeln, in den ein Sensor eingeführt wird. Dieser Sensor kann dann Daten über die chemische Zusammensetzung oder physikalische Eigenschaften des jeweiligen Stoffes liefern. Bei einer möglichen Ausführungsform handelt es sich bei dem Sensor um eine Sonde, die in die Komponente 6 bzw. im Stoff eingeführt wird.

Bei der Komponente 6 kann es sich um eine stationär aufgestellte Komponente, beispielsweise eine Maschinenkomponente handeln, aber auch um eine bewegliche Komponente, beispielsweise ein mobiles Gerät. Bei diesem mobilen Gerät kann es sich beispielsweise auch um ein Transportfahrzeug handeln.

Bei einer möglichen Ausführungsform umfassen die Sensoren des mobilen Fernwartungskommunikationsgerätes 3 gleichzeitig mehrere Komponenten gleichzeitig. Diese Komponenten 6 können verschiedene Tags, insbesondere RFID-Tags aufweisen, in denen verschiedene Komponenten-ID's abgespeichert sind. Bei einer weiteren möglichen Ausführungsform kommuniziert das mobile Gerät 3 direkt mit dem Service-Center 4 über eine entsprechende Funkverbindung, ohne dass ein Datennetzwerk 2, beispielsweise das Internet dafür notwendig ist.

## Patentansprüche

1. Mobiles Fernwartungskommunikationsgerät (3), mit:
mindestens einem Sensor (3E, 3F), der Sensordaten über den Zustand einer Komponente (6) erfasst; und
einer Netzwerkschnittstelle (3A) zum Herstellen einer Kommunikationsverbindung mit einem Service-Center (4) und zum Übertragen der Sensordaten an das Service-Center (4), **gekennzeichnet durch** ein Nahfeld-Kommunikationsmodul (3G), welches derart ausgebildet ist, dass sich darüber die Komponente (6) mit einem RFID-Tag (9) gegenüber dem mobilen Gerät (3) in regelmäßigen Zeitabständen über ein kryptographisches Authentisierungsverfahren authentisieren kann,
wobei die von dem mindestens einen Sensor (3E, 3F) erfassten Sensordaten entsprechend einer Autorisierung des mobilen Fernwartungskommunikationsgeräts (3) beschränkt an das Service-Center (4) übertragbar sind.

2. Mobiles Fernwartungskommunikationsgerät (3) nach Anspruch 1,
wobei die Netzwerkschnittstelle (3A) zum Aufbau einer drahtlosen Kommunikationsverbindung mit dem Service-Center (4) über ein Datennetzwerk (2) ausgelegt ist.

3. Mobiles Fernwartungskommunikationsgerät (3) nach einem der Ansprüche 1 und 2,
wobei der mindestens eine Sensor (3E, 3F) eine Kamera (3E), die Bild- oder Videodaten der Komponente (6) und/oder deren Umgebung liefert,
ein erstes Mikrofon (3F), das Geräuschdaten der Komponente (6) erfasst, ein zweites Mikrofon, das Sprachdaten eines Nutzers (5) erfasst, welcher das mobile Fernwartungskommunikationsgerät (3) trägt, und Sensoren, die physikalische Parameter der Komponente (6) erfassen, umfasst.

4. Mobiles Fernwartungskommunikationsgerät (3) nach Anspruch 1,
wobei die Beschränkung der an das Service-Center (4) übertragenen Sensordaten
hinsichtlich der Art der Sensordaten, welche Bilddaten, Videodaten, Geräuschdaten und Sprachdaten umfassen, erfolgt oder
hinsichtlich eines aktuellen Aufenthaltsortes des mobilen Fernwartungskommunikationsgeräts (3) oder
hinsichtlich eines Zeitpunktes der Erfassung der Sensordaten durch den Sensor (3E, 3F) oder
hinsichtlich der Komponente (6), die durch den Sensor (3E, 3F) sensorisch erfasst wird,
in Abhängigkeit von der für das mobile Fernwartungskommunikationsgerät (3) bestehenden Autorisierung erfolgt.

5. Mobiles Fernwartungskommunikationsgerät (3) nach einem der Ansprüche 1 bis 4,
wobei die Authentisierung gegenüber der Komponente (6) mittels eines kryptographischen Challenge-Response-Verfahrens erfolgt.

6. Mobiles Fernwartungskommunikationsgerät (3) nach einem der Ansprüche 1 bis 5, wobei das Fernwartungskommunikationsgerät derart ausgebildet ist, dass sich das mobile Fernwartungskommunikationsgerät (3) oder ein Nutzer (5), der das mobile Fernwartungskommunikationsgerät (3) trägt, gegenüber dem Service-Center (4) authentisieren kann.

7. Mobiles Fernwartungskommunikationsgerät (3) nach Anspruch 6, wobei das Fernwartungskommunikationsgerät derart ausgebildet ist, dass die Authentisierung des Nutzers (5), welcher das mobile Fernwartungskommunikationsgerät (3) trägt, gegenüber dem Service-Center (4) anhand von biometrischen Körpermerkmalen des Nutzers (5) oder anhand von sensorisch erfasster Sprache des Nutzers (5) erfolgen kann, wobei die Körpermerkmale oder die sensorisch erfasste Sprache von dem mobilen Fernwartungskommunikationsgerät (3) über das Datennetzwerk (2) an das Service-Center (4) übertragen werden.

8. Mobiles Fernwartungskommunikationsgerät (3) nach einem der Ansprüche 1 bis 7,
wobei mittels des Nahfeld-Kommunikationsmoduls (3G) ein Tag (9), welches an der Komponente (6) angebracht ist, drahtlos auslesbar ist, wobei in dem Tag (9) eine Komponenten-ID der Komponente (6) gespeichert ist.

9. Mobiles Fernwartungskommunikationsgerät (3) nach Anspruch 8, weiterhin mit:
einem konfigurierbaren Zugriffskontrollspeicher, in welchem die Komponenten-IDs von denjenigen Komponenten (6) gespeichert sind, für welche der Nutzer (5) des mobilen Fernwartungskommunikationsgeräts (3) autorisiert ist eine Wartungs- oder Reparaturmaßnahme durchzuführen,
wobei nur Sensordaten von denjenigen Komponenten (6) an das Service-Center (4) übertragen werden, für welche der jeweilige Nutzer (5) autorisiert ist.

10. System (1) zur Wartung einer Komponente (6), mit:
einem mobilen Fernwartungskommunikationsgerät (3) nach einem der Ansprüche 1 bis 9; und
einem Service-Center (4), an welches Sensordaten des mobilen Fernwartungskommunikationsgeräts (3) übertragen werden, falls das mobile Fernwartungskommunikationsgerät (3) dazu autorisiert ist und zwischen dem mobilen Fernwartungskommunikationsgerät (3) und der zu wartenden Komponente (6) eine erfolgreiche Authentisierung erfolgt ist.

11. System (1) nach Anspruch 10,
wobei die von dem mobilen Fernwartungskommunikationsgerät (3) an das Service-Center (4) übertragenen Sensordaten des Zustandes der Komponente (6) in dem Service-Center (4) einem Experten (8) zur Verfügung gestellt werden, welcher Instruktionen an den Nutzer (5), welcher das mobile Fernwartungskommunikationsgerät (3) trägt, zurück überträgt.

12. Verfahren zum Bereitstellen von Sensordaten über einen Zustand einer Komponente (6) für ein Service-Center (4), mit den Schritten:
Erfassen von Sensordaten über den Zustand einer Komponente (6) durch Sensoren (3E, 3F) eines dazu autorisierten mobilen Fernwartungskommunikationsgeräts (3) nach einem der Ansprüche 1 bis 9; und
Übertragen der erfassten Sensordaten durch das mobile Fernwartungskommunikationsgerät (3) an das Service-Center (4),
**gekennzeichnet durch** den Schritt des
Authentisierens der Komponente (6) gegenüber dem mobilen Fernwartungskommunikationsgerät (3) mit einem RFID-Tag (9) in regelmäßigen Zeitabständen über ein kryptographisches Authentisierungsverfahren, bevor ein Übertragen der erfassten Sensordaten erfolgt, wobei die von dem mindestens einen Sensor (3E, 3F) erfassten Sensordaten entsprechend einer Autorisierung des mobilen Fernwartungskommunikationsgeräts (3) beschränkt an das Service-Center (4) übertragen werden.

## Claims

1. Mobile remote maintenance communication device (3), having:
at least one sensor (3E, 3F) which captures sensor data relating to the state of a component (6); and
a network interface (3A) for establishing a communication connection to a service centre (4) and for transmitting the sensor data to the service centre (4),
**characterized by** a near field communication module (3G) which is designed in such a manner that it can be used to authenticate the component (6) with respect to the mobile device (3) using an RFID tag (9) at regular intervals of time via a cryptographic authentication method,
the sensor data captured by the at least one sensor (3E, 3F) being able to be transmitted to the service centre (4) in a restricted manner according to an authorization of the mobile remote maintenance communication device (3).

2. Mobile remote maintenance communication device (3) according to Claim 1,
the network interface (3A) being designed to set up a wireless communication connection to the service centre (4) via a data network (2).

3. Mobile remote maintenance communication device (3) according to either of Claims 1 and 2,
the at least one sensor (3E, 3F) comprising a camera (3E) which provides image or video data relating to the component (6) and/or its environment,
a first microphone (3F) which acquires noise data relating to the component (6), a second microphone which acquires speech data relating to a user (5) carrying the mobile remote maintenance communication device (3), and sensors which capture physical parameters of the component (6).

4. Mobile remote maintenance communication device (3) according to Claim 1,
the sensor data transmitted to the service centre (4) being restricted
with regard to the type of sensor data, which comprise image data, video data, noise data and speech data, or with regard to a current position of the mobile remote maintenance communication device (3), or
with regard to a time at which the sensor data are sensorially captured by the sensor (3E, 3F), or
with regard to the component (6) which is captured by the sensor (3E, 3F)
on the basis of the authorization which exists for the mobile remote maintenance communication device (3).

5. Mobile remote maintenance communication device (3) according to one of Claims 1 to 4,
the authentication with respect to the component (6) being carried out by means of a cryptographic challenge-response method.

6. Mobile remote maintenance communication device (3) according to one of Claims 1 to 5,
the remote maintenance communication device being designed in such a manner that the mobile remote maintenance communication device (3) or a user (5) carrying the mobile remote maintenance communication device (3) can be authenticated with respect to the service centre (4).

7. Mobile remote maintenance communication device (3) according to Claim 6,
the remote maintenance communication device being designed in such a manner that the user (5) carrying the mobile remote maintenance communication device (3) can be authenticated with respect to the service centre (4) on the basis of biometric physical features of the user (5) or on the basis of speech of the user (5) which is captured by means of sensors, the physical features or the speech captured by means of sensors being transmitted from the mobile remote maintenance communication device (3) to the service centre (4) via the data network (2).

8. Mobile remote maintenance communication device (3) according to one of Claims 1 to 7,
a tag (9) which is fitted to the component (6) being able to be wirelessly read by means of the near field communication module (3G), the tag (9) storing a component ID of the component (6).

9. Mobile remote maintenance communication device (3) according to Claim 8, also having:
a configurable access control memory which stores the component IDs of those components (6) for which the user (5) of the mobile remote maintenance communication device (3) is authorized to carry out a maintenance or repair measure,
only sensor data from those components (6) for which the respective user (5) is authorized being transmitted to the service centre (4).

10. System (1) for maintaining a component (6), having:
a mobile remote maintenance communication device (3) according to one of Claims 1 to 9; and
a service centre (4) to which sensor data from the mobile remote maintenance communication device (3) are transmitted if the mobile remote maintenance communication device (3) is authorized to do so and successful authentication has been carried out between the mobile remote maintenance communication device (3) and the component (6) to be maintained.

11. System (1) according to Claim 10,
the sensor data relating to the state of the component (6) which are transmitted from the mobile remote maintenance communication device (3) to the service centre (4) being made available in the service centre (4) to an expert (8) who transmits instructions back to the user (5) carrying the mobile remote maintenance communication device (3).

12. Method for providing sensor data relating to a state of a component (6) for a service centre (4), having the steps of:
capturing sensor data relating to the state of a component (6) by means of sensors (3E, 3F) of a mobile remote maintenance communication device (3) according to one of Claims 1 to 9 which is authorized to do so; and
transmitting the captured sensor data to the service centre (4) by means of the mobile remote maintenance communication device (3),
**characterized by** the step of
authenticating the component (6) with respect to the mobile remote maintenance communication device (3) using an RFID tag (9) at regular intervals of time via a cryptographic authentication method before the captured sensor data are transmitted, the sensor data captured by the at least one sensor (3E, 3F) being transmitted to the service centre (4) in a restricted manner according to an authorization of the mobile remote maintenance communication device (3).

## Revendications

1. Appareil de communication mobile de télémaintenance (3), comprenant :
au moins un capteur (3E, 3F) qui détecte des données de capteur sur l'état d'un composant (6) ; et
une interface réseau (3A) servant à établir une liaison de communication avec un centre de services (4) et à transmettre les données de capteur au centre de services (4),
**caractérisé par** un module de communication en champ proche (3G) réalisé de façon à permettre l'authentification du composant (6) vis-à-vis de l'appareil mobile (3) à l'aide d'une étiquette RFID (9) à des intervalles réguliers par un procédé d'authentification cryptographique,
les données de capteur détectées par le au moins un capteur (3E, 3F) étant transmissibles de façon limitée au centre de services (4) selon une autorisation de l'appareil de communication mobile de télémaintenance (3).

2. Appareil de communication mobile de télémaintenance (3) selon la revendication 1,
ladite interface réseau (3A) étant adaptée pour établir une liaison de communication sans fil avec le centre de services (4) via un réseau de données (2).

3. Appareil de communication mobile de télémaintenance (3) selon l'une des revendications 1 et 2,
ledit au moins un capteur (3E, 3F) comprenant :
une caméra (3E) qui fournit des données d'image ou vidéo du composant (6) et/ou de l'environnement de ce dernier,
un premier microphone (3F) qui détecte des données sonores du composant (6), un second microphone qui détecte des données vocales d'un utilisateur (5) portant l'appareil de communication mobile de télémaintenance (3), et des capteurs qui détectent des paramètres physiques du composant (6).

4. Appareil de communication mobile de télémaintenance (3) selon la revendication 1,
la limitation des données de capteur transmises au centre de services (4),
en termes de type de données de capteur comprenant des données d'image, des données vidéo, des données sonores et des données vocales ou
en termes de localisation actuelle de l'appareil de communication mobile de télémaintenance (3) ou
en termes de date de détection des données de capteur par le capteur (3E, 3F) ou
en termes de composant (6) détecté par le capteur (3E, 3F), s'effectuant en fonction de l'autorisation existant pour l'appareil de communication mobile de télémaintenance (3).

5. Appareil de communication mobile de télémaintenance (3) selon l'une des revendications 1 à 4,
l'authentification vis-à-vis du composant (6) s'effectuant au moyen d'un procédé cryptographique challenge/response.

6. Appareil de communication mobile de télémaintenance (3) selon l'une des revendications 1 à 5,
ledit appareil de communication mobile de télémaintenance étant tel que ledit appareil (3) ou un utilisateur (5) portant ledit appareil (3) puisse s'authentifier vis-à-vis du centre de services (4).

7. Appareil de communication mobile de télémaintenance (3) selon la revendication 6,
ledit appareil de communication mobile de télémaintenance étant tel que l'authentification de l'utilisateur (5) portant ledit appareil (3) vis-à-vis du centre de services (4) puisse s'effectuer à l'aide de caractéristiques corporelles biométriques de l'utilisateur (5) ou à l'aide de sons vocaux détectés par capteur de l'utilisateur (5), lesdites caractéristiques corporelles ou lesdits sons vocaux détectés par capteur étant transmis(es) par l'appareil de communication mobile de télémaintenance (3) via le réseau de données (2) au centre de services (4).

8. Appareil de communication mobile de télémaintenance (3) selon l'une des revendications 1 à 7,
une étiquette (9) apposée sur le composant (6) pouvant être lue sans fil au moyen du module de communication en champ proche (3G), un identificateur de composant du composant (6) étant mémorisé dans l'étiquette (9).

9. Appareil de communication mobile de télémaintenance (3) selon la revendication 8, comprenant en outre :
une mémoire à contrôle d'accès configurable, dans laquelle sont mémorisés les identificateurs de composant des composants (6) pour lesquels l'utilisateur (5) de l'appareil de communication mobile de télémaintenance (3) est autorisé à effectuer un travail de maintenance ou de réparation,
seules les données de capteur des composants (6) pour lesquels l'utilisateur (5) respectif est autorisé étant transmises au centre de services (4).

10. Système (1) de maintenance d'un composant (6), comprenant :
un appareil de communication mobile de télémaintenance (3) selon l'une des revendications 1 à 9 ; et
un centre de services (4) auquel les données de capteur de l'appareil de communication mobile de télémaintenance (3) sont transmises si l'appareil de communication mobile de télémaintenance (3) est autorisé à le faire et qu'une authentification réussie entre l'appareil de communication mobile de télémaintenance (3) et le composant (6) objet de la maintenance a eu lieu.

11. Système (1) selon la revendication 10,
les données de capteur de l'état du composant (6) transmises par l'appareil de communication mobile de télémaintenance (3) au centre de services (4) étant fournies au sein du centre de services (4) à un expert (8) qui transmet en retour des instructions à l'utilisateur (5) portant l'appareil de communication mobile de télémaintenance (3).

12. Procédé pour fournir des données de capteur sur l'état d'un composant (6) à un centre de services (4), comprenant les étapes de
détection de données de capteur sur l'état d'un composant (6) par des capteurs (3E, 3F) d'un appareil de communication mobile de télémaintenance (3) autorisé à le faire selon l'une des revendications 1 à 9 ; et transmission des données de capteur détectées par l'appareil de communication mobile de télémaintenance (3) au centre de services (4),
**caractérisé par** l'étape de
authentification du composant (6) vis-à-vis de l'appareil de communication mobile de télémaintenance (3) à l'aide d'une étiquette RFID (9) à des intervalles réguliers par un procédé d'authentification cryptographique avant de procéder à une transmission des données de capteur détectées, les données de capteur détectées par le au moins un capteur (3E, 3F) étant transmises de façon limitée au centre de services (4) selon une autorisation de l'appareil de communication mobile de télémaintenance (3).
